# EUROPÄISCHE PATENTSCHRIFT

(11) **EP 0 924 237 B1**
(45) Veröffentlichungstag und Bekanntmachung des Hinweises auf die Patenterteilung: **10.05.2000**
(21) Anmeldenummer: 98119008.5
(22) Anmeldetag: 08.10.1998
(51) Int. Cl.: C08G 77/26, C08G 77/54

(54) **Amino-alkylenoxidfunktionelle Organosiliciumverbindungen, deren Herstellung und Verwendung**
Amino-alkylene oxide functional organosilicon compounds, their preparation and use
Composés organosiliciques à fonction amino-oxyde d'alkylène, leur préparation et utilisation

(30) Priorität: 05.12.1997 DE 19754038
(43) Veröffentlichungstag der Anmeldung: 23.06.1999
(73) Patentinhaber: Wacker-Chemie GmbH, 81737 München (DE)
(72) Erfinder: Schröck, Robert Dr., 84503 Altötting (DE); Hierstetter, Thomas Dr., 84489 Burghausen (DE); Dauth, Jochen Dr., 84489 Burghausen (DE)
(74) Vertreter: Budczinski, Angelika

(56) Entgegenhaltungen:
- DE-C- 4 344 082
- PATENT ABSTRACTS OF JAPAN vol. 018, no. 591 (C-1272), 11. November 1994 & JP 06 220200 A (TOSHIBA SILICONE CO LTD), 9. August 1994

## Beschreibung

Die Erfindung betrifft amino-alkylenoxidfunktionelle Organosiliciumverbindungen, deren Herstellung und Verwendung.

In der Veröffentlichung von K. Andrianov Izv, Akad. Nauk. SSSR, Ser. Khim, Heft 2, 351-356 (1968) wird die Umsetzung von Isopropyldiallylamin bzw. Triallylamin und 1,3-Dihydrotetramethyldisilazan bzw. 1,3-Dihydrotetramethyldisiloxan mittels Hydrosilylierung beschrieben. Dabei werden die Reaktanden im molaren Verhältnis von mindestens 2:1 bis etwa 5:1 bezogen auf eingesetztes 1,3-Dihydrotetramethyldisilazan oder 1,3-Dihydrotetramethyldisiloxan und Isopropyldiallylamin bzw. Triallylamin verwendet. Das eingesetzte 1,3-Dihydrotetramethyldisilazan oder 1,3-Dihydrotetramethyldisiloxan reagiert zu einem kleineren Teil (26-44%) jeweils einmal mit dem verwendeten Isopropyldiallylamin bzw. Triallylamin. Beispielsweise erhält man bei der Umsetzung von Triallylamin mit 1,3-Dihydrotetramethyldisiloxan Tris-[3-(1',1',3',3'-tetramethyldisiloxy)propyl]aminin nur 21%er Ausbeute als einzig isolierbare Verbindung, die jedoch keine Allylgruppen, sondern Si-gebundenen Wasserstoff enthält.

In der Veröffentlichung von Du, Zuodong und Yu, Jing, Hecheng Xiangjiao Gongye 9(6), 388-92 (1986) werden Siliconkautschuke mit N,N-bisallyl-γ-aminopropyl-Seitenketten -Seitenketten beschrieben. Ihre Synthese verläuft über eine Hydrosilylierung des monofunktionellen Heptamethylcyclotetrasiloxans mit Triallylamin zu Heptamethyl-N,N-bisallyl-γ-aminopropyl-cyclotetrasiloxan, welches durch Ringöffnung zum entsprechenden Polymer (Siliconkautschuk) umgesetzt wird. Es handelt sich dabei um eine Reaktion zwischen dem molekularen und monofunktionellen Heptamethylcyclotetrasiloxan-Baustein mit einem weiteren molekularen Baustein, dem Triallylamin, ohne der Gefahr einer Vernetzungsreaktion oder eines Kettenaufbaus. Die Synthese des Siliconkautschuks findet als Zweistufenreaktion über den Umweg der Hydrosilylierung des Triallylamins an Heptamethylcyclotetrasiloxan statt.

In EP 342 518 B1 (ausgegeben am 30.11.1994, General Electric Co.) wird ein Verfahren zur Herstellung von Stickstoff-Silicium-Verbindungen beschrieben, die durch eine Hydrosilylierung eines olefinischen Amins an Si-H-funktionelle Polydiorganosiloxane erhalten werden. Dabei werden als Amin-Komponenten Monoallylamine eingesetzt.

In JP-A 06220200 (ausgegeben am 9. August 1994; Toshiba Silikon AG) werden Organopolysiloxane mit einer N-Polyoxyalkylenaminoalkylgruppe beschrieben, wobei jeweils zwei Polyoxyalkylenreste an ein Stickstoffatom gebunden sind.

DE 43 44 082 C1 (ausgegeben am 22.12.1994, Th. Goldschmidt AG) beschreibt ein Verfahren zur Herstellung von Organopolysiloxanen mit über Kohlenstoff an Silicium gebundenen sekundären Aminoalkylgruppen. Dabei werden mittels Hydrosilylierung unter Platinkatalyse sekundäre Aminoalkene, die nur eine Doppelbindung pro Molekül enthalten, an Si-H-tragende Organosiliciumverbindungen addiert. Die erhaltenen Organopolysiloxane mit über Kohlenstoff an Silicium gebundenen sekundären Aminoalkylgruppen lassen sich anschließend gegebenenfalls beispielsweise mit cyclischen Polyorganosiloxanen equilibrieren.

Gegenstand der Erfindung sind amino-alkylenoxidfunktionelle Organosiliciumverbindungen enthaltend
a) Siloxaneinheiten der Formel

   RₐSi(OR¹)_{b}O_{(4-a-b)/2} (I),

   wobei
   R gleiche oder verschiedene, gegebenenfalls mit Halogenatomen, Alkoxy- oder Hydroxygruppen substituierte Kohlenwasserstoffreste mit 1 bis 200 Kohlenstoffatomen, die mit einem oder mehreren Sauerstoffatomen unterbrochen sein können, bedeutet,
   R¹ gleiche oder verschiedene Alkylreste mit 1 bis 8 Kohlenstoffatomen, die durch ein oder mehrere Sauerstoffatome unterbrochen sein können, bedeutet,
   a 0, 1, 2 oder 3 ist und
   b 0, 1, 2 oder 3 ist, mit der Maßgabe, daß die Summe a+b≤ 3 ist,
   und
b) je Molekül mindestens eine Einheit der Formel

   AR_{c}SiO_{(4-c-1)/2} (II)

   und mindestens eine Einheit der Formel

   O_{(4-c-1)/2}R_{c}Si-A¹-SiR_{c}O_{(4-c-1)/2} (III),

   wobei
   R gleich oder verschieden sein kann und eine der oben angegebenen Bedeutungen hat,
   c gleich oder verschieden sein kann und 0, 1 oder 2, bevorzugt
   2, bedeutet,
   A einen Rest der Formel 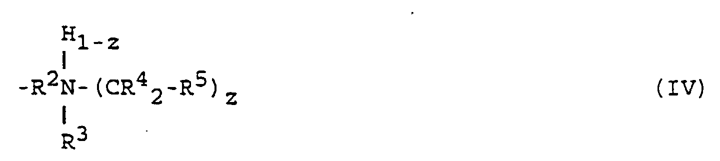
   bedeutet sowie
   A¹ einen Rest der Formel 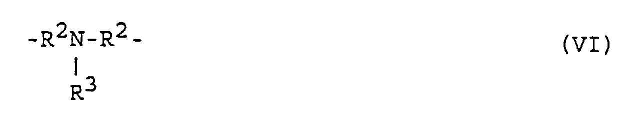 darstellt, wobei
   R² gleich oder verschieden sein kann und einen zweiwertigen Kohlenwasserstoffrest mit 2 bis 12 Kohlenstoffatomen bedeutet,
   R³ gleich oder verschieden sein kann und einen Rest der allgemeinen Formel

      -[CH₂CH₂O]ₒ-[C₃H₆O]ₚ-[(CH₂)₄O]_{q}-R⁸ (VII)

      bedeutet, wobei
   R⁸ ein Wasserstoffatom, einen Alkylrest mit 1 bis 22 Kohlenstoffatomen, eine Gruppe der Formel -SiRₓ(OR¹)_{y}, wobei R und R¹ gleich oder verschieden sein können und eine der oben angegebenen Bedeutungen haben sowie x und y unabhängig voneinander gleich 0, 1, 2 oder 3 sind, mit der Maßgabe, daß x + y gleich 3 ist, oder einen Rest der Formel -CO-R⁹ mit R⁹ gleich Alkylrest mit 1 bis 8 Kohlenstoffatomen bedeutet,
   z 0 oder 1, bevorzugt 1, ist und
   o, p, q unabhängig voneinander 0 oder eine ganze Zahl von 1 bis 200, bevorzugt 0 oder eine ganze Zahl von 1 bis 35, darstellen, mit der Maßgabe, daß die Summe o+p+q>0 ist,
   R⁴ gleich oder verschieden ist und ein Wasserstoffatom oder einen Alkylrest mit 1 bis 8 Kohlenstoffatomen bedeutet und
   R⁵ ein Wasserstoffatom oder Reste der Formel -CR⁶=CR⁶₂, -C≡CR⁶ darstellen, wobei R⁶ gleich oder verschieden sein kann und Wasserstoffatom oder einen Alkylrest mit 1 bis 8 Kohlenstoffatomen bedeutet.

Vorzugsweise enthalten die erfindungsgemäßen Organosiliciumverbindungen außer den Einheiten der Formeln (I), (II) und (III) keine weiteren Einheiten.

Die erfindungsgemäßen Organosiliciumverbindungen besitzen vorzugsweise ein durchschnittliches Molekulargewicht von 500 bis 1 000 000 g/mol, besonders bevorzugt 5 000 bis 150 000 g/mol, sowie vorzugsweise eine Viskosität von 10 bis 15 000 000 mm²/s, besonders bevorzugt 20 bis 100 000 mm²/s, jeweils bei 25°C.

Die erfindungsgemäßen Organosiliciumverbindungen weisen eine Aminzahl von vorzugsweise 0,003 bis 6 auf, wobei die Aminzahl der Anzahl von ml IN HCl entspricht, die zur Neutralisation von 1 g Substanz erforderlich ist.

Beispiele für R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexa- fluorisopropylrest, der Heptafluorisopropylrest und Halogenarylreste, wie der o-, m- und p-Chlorphenylrest, sowie Reste der Formel

-R⁷-[OCH₂CH₂]ₗ-[OC₃H₆]ₘ-[O(CH₂)₄]ₙ-OR' (VIII),

wobei
R⁷ ein Alkylenrest mit 1 bis 8 Kohlenstoffatomen, einen Arylen- oder Aralkylenrest bedeutet,
l, m und n unabhängig voneinander 0 oder eine ganze Zahl von 1 bis 200, bevorzugt 0 oder eine ganze Zahl von 1 bis 35, darstellen sowie
R' eine oben für R⁸ angegebene Bedeutung hat.

Beispiele für Reste R der Formel (VIII) sind
-(CH₂)₃-(OCH₂CH₂)₃-OCH₃, -(CH₂)₃-(OCH₂CH₂)₆-OCH₃,
-(CH₂)₃-(OCH₂CH₂)₃₅-OCH₃,
-(CH₂)₃-(OCH(CH₃)CH₂)₃-OCH₃, -(CH₂)₃-(OCH(CH₃)CH₂)₆-OCH₃,
-(CH₂)₃-(OCH(CH₃)CH₂)₃₅-OCH₃,
-(CH₂)₃-(OCH₂CH₂)₃-(OCH(CH₃)CH₂)₃-OCH₃,
-(CH₂)₃-(OCH₂CH₂)₆-(OCH(CH₃)CH₂)₆-OCH₃,
-(CH₂)₃-(OCH₂CH₂)₃₅-(OCH(CH₃)CH₂)₃₅-OCH₃,
-(CH₂)₃-(OCH₂CH₂)₃-OSi(CH₃)₃, -(CH₂)₃-(OCH₂CH₂)₆-OSi(CH₃)₃,
-(CH₂)₃-(OCH₂CH₂)₃₅-OSi(CH₃)₃,
-(CH₂)₃-(OCH₂CH₂)₃-OC(O)CH₃, -(CH₂)₃-(OCH₂CH₂)₆-OC(O)CH₃,
-(CH₂)₃-(OCH₂CH₂)₃₅-OC(O)CH₃, -(CH₂)₃-(OCH₂CH₂)₃-OH,
-(CH₂)₃-(OCH₂CH₂)₆-OH, -(CH₂)₃-(OCH₂CH₂)₃₅-OH,
-(CH₂)₃-(OCH(CH₃)CH₂)₃-OH, -(CH₂)₃-(OCH(CH₃)CH₂)₆-OH,
-(CH₂)₃- (OCH(CH₃)CH₂)₃₅-OH,
-(CH₂)₃-(OCH₂CH₂)₃-(OCH(CH₃)CH₂)3-OH,
-(CH₂)₃-(OCH₂CH₂)₆-(OCH(CH₃)CH₂)₆-OH,
-(CH₂)₃-(OCH₂CH₂)₃₅-(OCH(CH₃)CH₂)₃₅-OH und
-(CH₂)₃-(OCH₂CH₂)₁₈-(O(CH₂)₄)₁₈-OH.

Bevorzugt handelt es sich bei Rest R um den Methyl-, Ethyl- oder Phenylrest, wobei der Methylrest besonders bevorzugt ist.

Beispiele für Rest R¹ sind die für Rest R gleich Alkylreste angegebenen Beispiele sowie der Methoxyethyl- und Ethoxyethylrest, wobei es sich bei Rest R¹ bevorzugt um Alkylreste mit 1 bis 4 Kohlenstoffatomen, die durch Sauerstoffatome unterbrochen sein können, besonders bevorzugt um den Methyl- und den Ethylrest handelt.

Beispiele für den Rest R² sind lineare oder verzweigte Alkylenreste, wie etwa der 1,2-Ethylen-, 1,3-Propylen-, 1,2-Propylen-, 1,3-(2-Methylpropylen)- und Dimethylmethylenrest sowie -CH₂-CH=CH- und -C(CH₃)=CH-.

Bevorzugt handelt es sich bei Rest R² um 1,3-Propylen- und 1,2-Propylenrest sowie um -CH₂-CH=CH-, wobei der 1,3-Propylenrest besonders bevorzugt ist.

Beispiele für Reste R³ der Formel (VII) sind
-(CH₂CH₂O)₃-CH₃, -(CH₂CH₂O)₆-CH₃, -(CH₂CH₂O)₃₅-CH₃,
-(CH(CH₃)CH₂O)₃-CH₃, -(CH(CH₃)CH₂O)₆-CH₃,
-(CH(CH₃)CH₂O)₃₅-CH₃, -(CH₂CH₂O)₃-(CH(CH₃)CH₂O)₃-CH₃,
-(CH₂CH₂O)₅-(CH₂-CH(CH₃)O)₅-CH₃,
-(CH₂CH₂O)₁₀-(CH₂-CH(CH₃)O)₁₀-CH₃,
-(CH₂CH₂O)₃-Si(CH₃)₃, (CH₂CH₂O)₆-Si(CH₃)₃,
-(CH₂CH₂O)₃₅-Si(CH₃)₃, (CH₂CH₂O)₅-(CH₂-CH(CH₃)O)₅-Si(CH₃)₃,
-(CH₂CH₂O)₁₀-(CH₂-CH(CH₃)O)₁₀-Si(CH₃)₃,
-(CH₂CH₂O)₃-C(O)CH₃, -(CH₂CH₂O)₆-C(O)CH₃, -(CH₂CH₂O)₃₅-C(O)CH₃,
-(CH₂CH₂O)₅-(CH₂-CH(CH₃)O)₅-C(O)CH₃,
-(CH₂CH₂O)₁₀-(CH₂-CH(CH₃)O)₁₀-C(O)CH₃,
-(CH₂CH₂O)₃-H, -(CH₂CH₂O)₆-H, -(CH₂CH₂O)₃₅-H,
-(CH(CH₃)CH₂O)₃-H, -(CH(CH₃)CH₂O)₆-H,
-(CH(CH₃)CH₂O)₃₅-H, -(CH₂CH₂O)₃-(CH(CH₃)CH₂O)₃-H,
-(CH₂CH₂O)₅-(CH₂-CH(CH₃)O)₅-H, -(CH₂CH₂O)₁₀-(CH₂-CH(CH₃)O)₁₀-H
und -(CH₂CH₂O)₁₈-((CH₂)₄O)₁₈-H.

Bevorzugt handelt es sich bei Rest R³ um -(CH₂CH₂O)₆-H,
-(CH(CH₃)CH₂O)₆-H, -(CH₂CH₂O)₅- (CH₂-CH(CH₃)O)₅-H und
-(CH₂CH₂O)₁₀-(CH₂-CH(CH₃)O)₁₀-H, wobei
-(CH₂CH₂O)₅-(CH₂-CH(CH₃)O)₅-H und
-(CH₂CH₂O)₁₀-(CH₂-CH(CH₃)O)₁₀-H besonders bevorzugt sind.

Beispiele für die Reste R⁴ und R⁶ sind unabhängig voneinander Wasserstoffatom und die für Rest R angegebenen Beispiele für lineare und verzweigte Alkylreste mit 1 bis 8 Kohlenstoffatomen.

Bevorzugt handelt es sich bei Rest R⁴ und R⁶ unabhängig voneinander um Wasserstoffatom, Methyl- und Ethylrest, wobei Wasserstoffatom besonders bevorzugt ist.

Beispiele für den Rest R⁵ sind -CH=CH₂, -C(CH₃)=CH₂, -C≡CH, -C≡C-CH₃, -C≡C-C₂H₅, -CH=CH-CH₃, -CH=C(CH₃)₂, wobei -CH=CH₂ und -C≡CH bevorzugt sind und -CH=CH₂ besonders bevorzugt ist.

Beispiele für Reste R⁷ sind lineare oder verzweigte Alkylenreste, wie etwa der Methylen-, 1,2-Ethylen-, 1,3-Propylen- und der 1,2-Propylenrest, wobei der 1,3-Propylen- und der 1,2-Propylenrest bevorzugt sind und der 1,3-Propylenrest besonders bevorzugt ist.

Beispiele für Rest R⁸ sind Wasserstoffatom sowie die für Rest R angegebenen Beispiele für Alkylreste mit 1 bis 22 Kohlenstoffatomen sowie -Si(CH₃)₃ und -C(O)-CH₃, wobei Wasserstoffatom, der Methyl- und n-Butylrest bevorzugt sind.

Beispiele für Reste R⁹ sind die für Rest R gleich Alkylreste mit 1 bis 8 Kohlenstoffatomen angegebenen Beispiele, wobei der Methylrest bevorzugt ist.

Beispiele für Rest R' sind die für R⁸ angegebenen Beispiele, wobei Wasserstoffatom, Methyl- und n-Butylrest bevorzugt und Wasserstoffatom und Methylrest besonders bevorzugt sind.
a ist bevorzugt 1, 2 oder 3.
b ist bevorzugt 0 oder 1.
c ist bevorzugt 2.
o ist bevorzugt 0 oder eine ganze Zahl von 1 bis 15.
p ist bevorzugt 0 oder eine ganze Zahl von 1 bis 15.
q ist bevorzugt 0.
l ist bevorzugt 0 oder eine ganze Zahl von 1 bis 15.
m ist bevorzugt 0 oder eine ganze Zahl von 1 bis 15.
n ist bevorzugt 0.

Beispiele für Reste A sind
-(CH₂)₃-N(R³)-CH₂-CH=CH₂,
-(CH₂)₃-N(R³)-H,
-(CH₂)₃-N(R³)-CH₃,
-(CH₂-CH(CH₃)-CH₂)-N(R³)-CH₂-C(CH₃)=CH₂,
-(CH₂-CH(CH₃)-CH₂)-N(R³)-H,
-(CH=CH-CH₂)-N(R³)-CH₂-C≡CH und
-(CH=CH-CH₂)-N(R³)-H, wobei R³ die oben angegebene Bedeutung hat.

Beispiele für Reste A¹ sind -(CH₂)₃-N(R³)-(CH₂)₃-,
-(CH₂)₃-N(R³)-(CH₂-CH=CH)-,
-(CH₂-CH(CH₃)-CH₂)-N(R³)-CH₂-CH(CH₃)-CH₂- und
-(CH=CH-CH₂)-N(R³)-(CH₂-CH=CH)-, wobei R³ die oben angegebene Bedeutung hat.

Bevorzugt handelt es sich bei Rest A um -(CH₂)₃-N(R³)-CH₂-CH=CH₂ und -(CH=CH-CH₂)-N(R³)-CH₂-C≡CH, wobei -(CH₂)₃-N(R³)-CH₂-CH=CH₂ besonders bevorzugt ist mit R³ gleich der oben angegebenen Bedeutung.

Bevorzugt handelt es sich bei Rest A¹ um -(CH₂)₃-N(R³)-(CH₂)₃- und (CH=CH-CH₂)-N(R³)-(CH₂-CH=CH)-, wobei -(CH₂)₃-N(R³)-(CH₂)₃- besonders bevorzugt ist mit R³ gleich der oben angegebenen Bedeutung.

Beispiele für die erfindungsgemäßen Organosiliciumverbindungen sind solche, die aufgebaut sind aus den folgenden Einheiten:
a) Me₂SiO_{2/2}, Me₃SiO_{1/2}, _{2/2}OMeSi-(CH₂)₃-N(R³)-(CH₂)₃-SiMeO_{2/2} und _{2/2}OMeSi-(CH₂)₃-N(R³)-CH₂-CH=CH₂ und
b) Me₂SiO_{2/2}, _{1/2}OMe₂Si-(CH₂)₃-N(R³)-(CH₂)₃-SiMe₂O_{1/2} und _{1/2}OMe₂Si-(CH₂)₃-N(R³)-CH₂-CH=CH₂,
wobei R³ die oben genannte Bedeutung hat.

Ein weiterer Gegenstand der Erfindung ist ein Verfahren zur Herstellung von amino-alkylenoxidfunktionellen Organosiliciumverbindungen, dadurch gekennzeichnet, daß Organosiliciumverbindungen aus Einheiten der allgemeinen Formel

H_{d}Rₑ(OR¹)_{f}SiO_{(4-e-d-f)/2} (IX),

wobei
R und R¹ die oben dafür angegebene Bedeutung haben,
d 0 oder 1, durchschnittlich 0,001 bis 1, ist,
e und f unabhängig voneinander 0, 1, 2 oder 3 sind, mit der Maßgabe, daß die Summe d+e+f ≤ 3 ist und die Organosiliciumverbindung mehr als ein Si-gebundenes Wasserstoffatom aufweist, mit einem oder mehreren Aminen der allgemeinen Formel 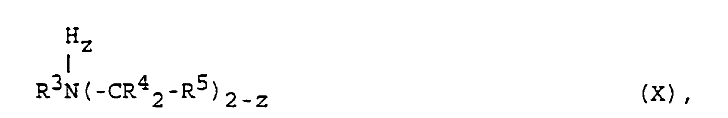
wobei z, R³, R⁴ und R⁵ die oben angegebene Bedeutung haben, mit der Maßgabe, daß die Amine gemäß Formel (X) mindestens einen Rest R⁵ verschieden Wasserstoffatom aufweisen und mindestens ein Amin der Formel (X) mit z=0 vorhanden ist, in Anwesenheit von die Anlagerung von Si-gebundenem Wasserstoff an aliphatische Kohlenstoff-Kohlenstoff-Mehrfachbindung förderndem Katalysator umgesetzt werden.

Die erfindungsgemäß eingesetzten Organosiliciumverbindungen mit mehr als einem Si-gebundenen Wasserstoff aus Einheiten der Formel (IX) haben einen Gehalt an Si-gebundenem Wasserstoff von vorzugsweise mindestens 0,04 Gewichtsprozent, besonders bevorzugt 0,1 bis 1,6 Gewichtsprozent, auf.

Die erfindungsgemäß eingesetzten Organosiliciumverbindungen mit mehr als einem Si-gebundenen Wasserstoff aus Einheiten der Formel (IX) haben eine durchschnittliche Viskosität von vorzugsweise 5 bis 20 000 mm²/s, besonders bevorzugt 10 bis 5 000 mm²/s, insbesondere von 10 bis 2 000 mm²/s, jeweils bei 25°C.

Bei dem erfindungsgemäßen Verfahren werden als Organosiliciumverbindungen mit mehr als einem Si-gebundenen Wasserstoffatom je Molekül bevorzugt solche der Formel

H_{g}R_{3-g}SiO(SiR₂O)ᵣ(SiRHO)ₛSiR_{3-g}H_{g} (XI)

verwendet, wobei
R die oben dafür angegebene Bedeutung hat,
g 0 oder 1 ist,
r 0 oder eine ganze Zahl von 1 bis 1500 ist, bevorzugt 1 bis 500, und
s 0 oder eine ganze Zahl von 1 bis 200 ist, bevorzugt 1 bis 100, mit der Maßgabe, daß die Organosiliciumverbindungen pro Molekül mehr als ein Si-gebundenes Wasserstoffatom aufweisen und die r Einheiten -(SiR₂O)- sowie die s Einheiten -(SiRHO)-beliebig im Molekül verteilt sein können.

Beispiele für die erfindungsgemäß eingesetzten Organosiliciumverbindungen mit mehr als einem Si-gebundenen Wasserstoffatom je Molekül sind α,ω-Trimethylsilyl-terminiertes Dimethyl/Methylhydrogenpolysiloxan, α,ω-Dimethylhydrogensilyl-terminiertes Dimethylpolysiloxan, α,ω-Dimethylhydrogensilyl-terminiertes Dimethyl-/Methylhydrogenpolysiloxan mit einem Gehalt an Si-gebundenem Wasserstoff von 0,1 bis 1,6 Gewichtsprozent.

Die erfindungsgemäß eingesetzten Organosiliciumverbindungen mit mehr als einem Si-gebundenen Wasserstoffatom sind handelsübliche Produkte bzw. nach in der Siliciumchemie bekannten Verfahren herstellbar.

Beispiele für die erfindungsgemäß eingesetzten Amine der Formel (X) sind
R³N-(CH₂-CH=CH₂)₂, R³N-(CH₂-C≡CH)₂, R³N(H)-CH₂-CH=CH₂,
H₂C=CH-CH₂-N(R³)-CH₃, H₂C=CH-CH₂-N(R³)-CH₂-C≡CH,
H₂C=C(CH₃)-CH₂-N(R³)-CH₂-C(CH₃)=CH₂,
H₂C=C(CH₃)-CH₂-N(R³)-H, HC≡C-CH₂-N(R³)-CH₂-C≡CH und
HC≡C-CH₂-N(R³)-H, wobei die Reste R³N-(CH₂-CH=CH₂)₂,
R³N(H)-CH₂-CH=CH₂, H₂C=CH-CH₂-N(R³)-CH₃,
HC≡C-CH₂-N(R³)-CH₂-C≡CH und H₂C=C(CH₃)-CH₂-N(R³)-H bevorzugt und R³N-(CH₂-CH=CH₂)₂ sowie R³N-(CH₂-C≡CH)₂ besonders bevorzugt sind, mit R³ gleich der obengenannten Bedeutung.

Die erfindungsgemäß eingesetzten Amine der Formel (X) sind handelsübliche Produkte bzw. nach in der organischen Chemie bekannten Verfahren herstellbar.

Bei dem erfindungsgemäßen Verfahren wird Amin der Formel (X) vorzugsweise in solchen Mengen eingesetzt, daß 0,01 bis 10 Mol, bevorzugt 0,1 bis 5 Mol, Amin je Grammatom Si-gebundener Wasserstoff in der Organosiliciumverbindung aus Einheiten der Formel (IX) vorliegen.

Als die Anlagerung von Si-gebundenem Wasserstoff an aliphatische Mehrfachbindung fördernde Katalysatoren können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern wie Siliciumdioxid, Aluminiumoxid oder Aktivkohle befinden kann, Verbindungen oder Komplexe von Platin, wie Platinhalogenide, z.B. PtCl₄, H₂PtCl₆· 6 H₂O, Na₂PtCl₆· 4 H₂O, Platin-Olefin-Komplexe, Platin-Alkohol-Komplexe, Platin-Alko- holat-Komplexe, Platin-Ether-Komplexe, Platin-Aldehyd-Komplexe, Platin-Keton-Komplexe, einschließlich Umsetzungsprodukten aus H₂PtCl₆· 6 H₂O und Cyclohexanon, Platin-Vinylsiloxankomplexe, wie Platin-1,3-divinyl-1,1,3,3-tetramethyldisiloxan-Komplexe mit oder ohne Gehalt an nachweisbarem anorganisch gebundenem Halogen, Bis-(γ-picolin) -platindichlorid, Trimethylendipyridinplatindichlorid, Dicyclopentadienplatindichlorid, Dimethylsulfoxidethylenplatin-(II)-dichlorid, Cyclooctadien-Platindichlorid, Norbornadien-Platindichlorid, γ-Picolin-Platindichlorid, Cyclopentadien-Platindichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe. Weiterhin können als die Hydrosilylierung fördernde Katalysatoren Verbindungen und Komplexe von Rhodium, wie Rhodiumkomplexe, verwendet werden.

Bei dem erfindungsgemäßen Verfahren wird Katalysator in Mengen von vorzugsweise 2 bis 300 Gew.-ppm (Gewichtsteilen je Million Gewichtsteilen), besonders bevorzugt in Mengen von 5 bis 100 Gew.-ppm, eingesetzt, jeweils berechnet als elementares Platin und bezogen auf das Gesamtgewicht an eingesetztem Amin der Formel (X) und Si-gebundenen Wasserstoff aufweisender Organosiliciumverbindung aus Einheiten der Formel (IX).

Das erfindungsgemäße Verfahren wird vorzugsweise beim Druck der umgebenden Atmosphäre, also zwischen 900 und 1020 hPa, durchgeführt; es kann aber auch bei höheren oder niedrigeren Drücken durchgeführt werden.

Das erfindungsgemäße Verfahren wird vorzugsweise bei einer Temperatur von 25 bis 150°C, bevorzugt 100 bis 130°C, durchgeführt.

Bei dem erfindungsgemäßen Verfahren können gegenüber der erfindungsgemäßen Umsetzung inerte, organische Lösungsmittel mitverwendet werden, was jedoch nicht bevorzugt ist.

Beispiele für solche inerte, organische Lösungsmittel sind Toluol, Xylol, Isophoron, Octanisomere, Butylacetat und Isopropanol.

Das erfindungsgemäße Verfahren kann auch in Emulsion durchgeführt werden.

Das erfindungsgemäße Verfahren kann kontinuierlich oder diskontinuierlich durchgeführt werden.

Nach Beendigung der erfindungsgemäßen Umsetzung kann die erhaltene Aminogruppen aufweisende Organosiliciumverbindung nach bekannten Verfahren isoliert werden, wie beispielsweise durch Entfernen, vorzugsweise durch Destillation, von mitverwendetem organischen Lösungsmittel.

Durch das erfindungsgemäße Verfahren können Organosiliciumverbindungen mit mehr als einem Si-gebundenen Wasserstoffatom mit aliphatischer Kohlenstoff-Kohlenstoff-Mehrfachbindung aufweisenden Aminen bei niedriger Temperatur über die weiteren am Amin verbleibenden aliphatisch ungesättigten Gruppen und ohne Inhibierung des Katalysators polymeranalog mit kurzen Reaktionszeiten, ohne starke Verfärbung und mit hohen Umsätzen umgesetzt werden. Die gewählten Reaktionsbedingungen erlauben beispielsweise die Darstellung von Allyl-, Methallyl- und Propargylgruppen tragenden Siloxancopolymeren.

Das erfindungsgemäße Verfahren besitzt die Vorteile, daß eine Organosiliciumverbindung in einem Reaktionschritt mit Amino- und Alkylenoxidresten funktionalisiert werden kann, wobei eine end- oder seitenständige Funktionalisierung ebenso wie der Einbau der Amino-alkylenoxid-Funktionen in die Organosiliciumkette erfolgen kann.

Ein weiterer Vorteil ist die einfache Ausführung des erfindungsgemäßen Verfahrens, welche zu einem kompletten Umsatz führt.

Die Möglichkeit durch gezielten Kettenaufbau die Viskosität des Produkts einzustellen ist ebenfalls ein entscheidender Vorteil.

Ferner besitzt das erfindungsgemäße Verfahren den Vorteil, daß durch die Wahl der Edukte sowie die Stöchiometrie der Edukte bei ansonsten annähernd gleichen Reaktionsparametern neben der Viskosität auch sehr einfach die Hydrophilie und die Aminzahl der Produkte variiert werden kann.

Falls erwünscht können die nach dem erfindungsgemäßen Verfahren erhaltenen Amino-alkylenoxidgruppen aufweisenden Organosiliciumverbindungen protoniert, acyliert oder quaternisiert werden.

Falls erwünscht, können die nach dem erfindungsgemäßen Verfahren erhaltenen amino-alkylenoxidfunktionellen Organosiliciumverbindungen mit Organopolysiloxanen (1), bevorzugt ausgewählt aus der Gruppe, bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten, equilibriert werden, wodurch beispielsweise die Einstellung des gewünschten Molekulargewichts sowie die gezielte Verteilung der Aminogruppen im Molekül ermöglicht wird.

Vorzugsweise werden als lineare, endständige Triorganosiloxygruppen aufweisende Organopolysiloxane solche der Formel

R¹⁰ ₃SiO(SiR¹⁰ ₂O)ᵤSiR¹⁰ ₃ (XII),

als lineare, endständige Hydroxylgruppen aufweisende Organpolysiloxane solche der Formel

HO(SiR¹⁰ ₂O)ᵥH (XIII),

als cyclische Organopolysiloxane solche der Formel

(SiR¹⁰ ₂O)ₜ (XIV),

und als Mischpolymerisate solche aus Einheiten der Formel
R¹⁰ ₃SiO_{1/2}, R¹⁰ ₂SiO und R¹⁰SiO_{3/2} eingesetzt, wobei
R¹⁰ jeweils gleich oder verschieden sein kann und eine für R angegebene Bedeutung hat,
u 0 oder eine ganze Zahl von 1 bis 1500 ist,
v 0 oder eine ganze Zahl von 1 bis 1500 ist und
t eine ganze Zahl im Wert von 3 bis 12 ist.

Die Mengenverhältnisse der bei der gegebenenfalls durchgeführten Equilibrierung eingesetzten Organopolysiloxane (1) und erfindungsgemäß hergestellten amino-alkylenoxidfunktionellen Organosiliciumverbindungen werden lediglich durch den gewünschten Anteil der Aminoalkylenoxidgruppen in den bei der gegebenenfalls durchgeführten Equilibrierung erzeugten Organopolysiloxanen und durch die gewünschte mittlere Kettenlänge bestimmt.

Bei der gegebenenfalls durchgeführten Equilibrierung werden vorzugsweise basische Katalysatoren, welche die Equilibrierung fördern, eingesetzt. Beispiele für solche Katalysatoren sind Benzyltrimethylammoniumhydroxid, Tetramethylammoniumhydroxid, Alkalihydroxid und Erdalkalihydroxid in methanolischer Lösung sowie Silanolate. Bevorzugt sind hierbei Alkalihydroxide, welche in Mengen von vorzugsweise 50 bis 10 000 Gew.-ppm (Teile je Million), insbesondere 500 bis 2000 Gew.-ppm, jeweils bezogen auf das Gesamtgewicht der eingesetzten Organosiliciumverbindungen, verwendet wird.

Die gegebenenfalls durchgeführte Equilibrierung wird vorzugsweise bei 80 bis 150°C und beim Druck der umgebenden Atmosphäre, also zwischen 900 und 1100 hPa, durchgeführt. Es kann aber auch bei höheren oder niedrigeren Drücken durchgeführt werden.

Das Equilibrieren kann, falls erwünscht, in mit Wasser nicht mischbarem Lösungsmittel, wie Toluol, durchgeführt werden, was jedoch nicht bevorzugt ist. Falls solche organischen Lösungsmittel jedoch eingesetzt werden, sind Mengen von 5 bis 20 Gewichtsprozent, bezogen auf das Gesamtgewicht der eingesetzten Organosiliciumverbindungen, bevorzugt.

Vor dem Aufarbeiten des bei dem erfindungsgemäßen Equilibrieren erhaltenen Gemisches kann der Katalysator unwirksam gemacht werden.

Die erfindungsgemäßen bzw. erfindungsgemäß hergestellten amino-alkylenoxidfunktionellen Organosiliciumverbindungen zeichnen sich durch Transparenz, geringe Verfärbung und Geruchlosigkeit aus.

Die Möglichkeit der gezielten Einstellung von Hydrophilie und Aminzahl, die unabhängig voneinander möglich ist, stellt einen weiteren Vorteil der erfindungsgemäßen Organosiliciumverbindungen dar.

Ein weiterer Vorteil der erfindungsgemäßen bzw. erfindungsgemäß hergestellten amino-alkylenoxidfunktionellen Organosiliciumverbindungen, die OH-terminierte Alkylenoxid-Funktionen enthalten, ist der äußerst geringe Gehalt an Si-OC Verknüpfungen im Polymer, der sich positiv auf die Langzeitstabilität der Produkte auswirkt.

Die erfindungsgemäßen bzw. erfindungsgemäß hergestellten Amino-alkylenoxidgruppen aufweisenden Organosiliciumverbindungen, oder gegebenenfalls die Siloxancopolymere mit gegebenenfalls teil- oder vollprotonierten bzw. teil- oder vollquaternisierten Amingruppen, können z.B. als Bestandteil einer Emulsion auf Textilien aller Art, wie z.B. auf Baumwolle, Kunstfasern, oder etwa Leder appliziert werden, und führen zu einer hydrophilen Ausrüstung dieser Stoffe mit gegebenenfalls erwünschtem Weichgriff.

Des weiteren haben die erfindungsgemäßen bzw. erfindungsgemäß hergestellten Organosiliciumverbindungen, die Alkenylgruppen aufweisen, also solche mit z gleich 1 und R⁵ verschieden Wasserstoff, den Vorteil, daß sie mit Verbindungen mit Si-gebundenem Wasserstoff durch weitere Hydrosilylierungreaktionen gezielt vernetzt werden können.

Die erfindungsgemäßen bzw. erfindungsgemäß hergestellten Aminogruppen aufweisenden Organosiliciumverbindungen können für alle Zwecke eingesetzt werden, für die auch bisher Organosiliciumverbindungen mit Aminogruppen bzw. aliphatisch ungesättigten Resten verwendet wurden, wie beispielsweise in Kosmetik- und Antischaumanwendungen, für die Textilausrüstung, Faserbehandlung, für Teppiche, Lederausrüstung, für sog. Polish, in additionsvernetzbaren Systemen, wie Papierbeschichtungen oder als permanente Gewebebeschichtungen, und in Kautschuken.

So können z.B. die erfindungsgemäßen bzw. erfindungsgemäß hergestellten Organosiliciumverbindungen in Zusammensetzungen, insbesondere Emulsionen, zur Behandlung von organischen Fasern aller Art, wie z.B. Textilien aus Baumwolle und/oder Kunstfasern, oder Leder verwendet werden, wobei solche erfindungsgemäßen Zusammensetzungen meist zu einer permanenten, hydrophilen Ausrüstung der genannten Materialien mit gegebenenfalls erwünschtem Weichgriff führen.

Die erfindungsgemäßen bzw. erfindungsgemäß hergestellten Organosiliciumverbindungen haben bei Verwendung in der Textilausrüstung den Vorteil, daß die damit ausgerüsteten Textilien eine geringe Vergilbung, eine sehr hohe Hydrophilie und einen sehr guten Weichgriff zeigen.

In den nachfolgenden Beispielen beziehen sich alle Angaben von Teilen und Prozentsätzen, soweit nicht anders angegeben ist, auf das Gewicht. Sofern nicht anders angegeben, werden die nachfolgenden Beispiele bei einem Druck der umgebenden Atmosphäre, also etwa bei 1000 hPa, und bei Raumtemperatur, also bei etwa 20°C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Als Jodzahl wird in den folgenden Beispielen die Zahl bezeichnet, welche die bei der Addition an die aliphatische Mehrfachbindung verbrauchte Jodmenge in Gramm pro 100 Gramm eingesetztes, zu untersuchendes Material, angibt.

### Beispiel 1

15,4 g eines ethoxylierten/propoxylierten Diallylamins (20,0 mmol) mit durchschnittlich 5 Propoxy- und 5 Ethoxyeinheiten sowie einem Molekulargewicht M_{w} von 768 g/mol der durchschnittlichen Formel

(CH₂=CH-CH₂)₂-N-(CH₂CH₂O)₅-(CH₂CH(CH₃)O)₅-H

werden unter Stickstoffinertisierung vorgelegt und auf 120°C aufgeheizt. Bei dieser Temperatur werden 320 µl (50 ppm) eines Acetylacetonyl-cyclooctenylplatin-(II)-acetylacetonat-Katalysators in Isobutylmethylketon (1%ige Lösung) zugegeben. Anschließend werden im Verlauf von 60 Minuten 40,6 g (20,0 mmol Si-H) eines α,ω-Dihydrogenpolydimethylsiloxans der mittleren Kettenlänge 55 mit einer Viskosität von 67 mm²/s zudosiert und das Reaktionsgemisch 2 Stunden lang bei einer Temperatur von 120°C gehalten. Danach erfolgt die Abtrennung flüchtiger Bestandteile bei 110°C und einem Druck von 5 mbar. Nach Abkühlung und anschließender Filtration erhält man ein klares, hellgelbes Öl mit einer Viskosität von 834 mm²/s und einer Jodzahl von 9,74. Die Ausbeute beträgt 97%.

### Beispiel 2

### 1.Stufe

50,0 g des in Beispiel 1 beschriebenen ethoxylierten/propoxylierten Diallylamins (65,1 mmol) werden mit 7,14 g (70,0 mmol) Essigsäureanhydrid und einem Tropfen konzentrierter Schwefelsäure 1 Stunde bei 80°C gerührt. Nach Abtrennen flüchtiger Bestandteile bei 110°C und einem Druck von 5 mbar wird mit Natriumhydrogencarbonat neutralisiert und filtriert. Man erhält ein klares Öl mit einer Viskosität von 70,6 mm²/s und einer Jodzahl von 52,8. Die Ausbeute beträgt 95%.

### 2. Stufe

16,7 g des in der 1. Stufe erhaltenen mit Acetylgruppen endgestoppten ethoxylierten/propoxylierten Diallylamins (20,6 mmol) (durchschnittlich 5 Propoxy- und 5 Ethoxyeinheiten, Molekulargewicht M_{w}=810 g/mol) werden unter Stickstoffinertisierung vorgelegt und auf 120°C aufgeheizt. Bei dieser Temperatur werden 320 µl (50 ppm) eines Acetylacetonyl-cyclooctenyl-platin-(II)-acetylacetonat-Katalysators in Isobutylmethylketon (1%ige Lösung) zugegeben. Anschließend werden im Verlauf von 60 Minuten 40,6 g (20,0 mmol Si-H) eines α,ω-Dihydrogenpolydimethylsiloxans der mittleren Kettenlänge 55 mit einer Viskosität von 67 mm²/s zudosiert und das Reaktionsgemisch 2 Stunden lang bei einer Temperatur von 120°C gehalten. Danach erfolgt die Abtrennung flüchtiger Bestandteile bei 110°C und einem Druck von 5 mbar. Nach Abkühlung und anschließender Filtration erhält man ein klares, hellgelbes Öl mit einer Viskosität von 928 mm²/s und einer Jodzahl von 9,48. Die Ausbeute beträgt 96%.

### Beispiel 3

25,1 g eines ethoxylierten/propoxylierten Diallylamins (20,0 mmol) mit durchschnittlich 10 Propoxy- und 10 Ethoxyeinheiten und einem Molekulargewicht M_{w} von 1256 g/mol der durchschnittlichen Formel

(CH₂=CH-CH₂)₂-N-(CH₂CH₂O)₁₀-(CH₂CH(CH₃)O)₁₀-H

werden unter Stickstoffinertisierung vorgelegt und auf 120°C aufgeheizt. Bei dieser Temperatur werden 370 µl (50 ppm) eines Acetylacetonyl-cyclooctenyl-platin-(II)-acetylacetonat-Katalysators in Isobutylmethylketon (1%ige Lösung) zugegeben. Anschließend werden im Verlauf von 60 Minuten 40,6 g (20,0 mmol Si-H) eines α,ω-Dihydrogenpolydimethylsiloxans der mittleren Kettenlänge 55 mit einer Viskosität von 67 mm²/s zudosiert und das Reaktionsgemisch 2 Stunden lang bei einer Temperatur von 120°C gehalten. Danach erfolgt die Abtrennung flüchtiger Bestandteile bei 110°C und einem Druck von 5 mbar. Nach Abkühlung und anschließender Filtration erhält man ein klares, hellgelbes Öl mit einer Viskosität von 5916 mm²/s und einer Jodzahl von 6,89. Die Ausbeute beträgt 97%.

### Beispiel 4

50,2 g des in Beispiel 3 beschriebenen ethoxylierten/propoxylierten Diallylamins (40,0 mmol) werden in 65,6 g Toluol unter Stickstoffinertisierung vorgelegt und auf 120°C aufgeheizt. Bei dieser Temperatur werden 740 µl (50 ppm) eines Acetylacetonylcyclooctenyl-platin-(II)-acetylacetonat-Katalysators in Isobutylmethylketon (1% ige Lösung) zugegeben. Anschließend werden im Verlauf von 60 Minuten 81,2 g (40,0 mmol Si-H) eines α,ω-Di- hydrogenpolydimethylsiloxans der mittleren Kettenlänge 55 mit einer Viskosität von 67 mm²/s zudosiert und das Reaktionsgemisch 2 Stunden lang bei einer Temperatur von 120°C gehalten. Danach erfolgt die Abtrennung flüchtiger Bestandteile bei 110°C und einem Druck von 5 mbar. Nach Abkühlung und anschließender Filtration erhält man ein klares, hellgelbes Öl mit einer Viskosität von 5916 mm²/s und einer Jodzahl von 6,89. Die Ausbeute beträgt 94%.

### Beispiel 5

37,6 g des in Beispiel 3 beschriebenen ethoxylierten/propoxylierten Diallylamins (30,0 mmol) werden in 50,9 g Toluol unter Stickstoffinertisierung vorgelegt und auf 120°C aufgeheizt. Bei dieser Temperatur werden 804 µl (50 ppm) eines Acetylacetonylcyclooctenyl-platin-(II)-acetylacetonat-Katalysators in Isobutylmethylketon (1% ige Lösung) zugegeben. Anschließend werden im Verlauf von 60 Minuten 104,2 g (51,0 mmol Si-H) eines α,ω-Dihydrogenpolydimethylsiloxans der mittleren Kettenlänge 55 mit einer Viskosität von 67 mm²/s zudosiert und das Reaktionsgemisch 2 Stunden lang bei einer Temperatur von 120°C gehalten. Danach erfolgt die Abtrennung flüchtiger Bestandteile bei 110°C und einem Druck von 5 mbar. Nach Abkühlung und anschließender Filtration erhält man ein klares, hellgelbes Öl mit einer Viskosität von 36200 mm²/s und einer Jodzahl von 1,87. Die Ausbeute beträgt 95%.

### Beispiel 6

24,0 g des in Beispiel 1 beschriebenen ethoxylierten/propoxylierten Diallylamins (32,0 mmol) werden in 21,1 g Toluol unter Stickstoffinertisierung vorgelegt und auf 120°C aufgeheizt. Bei dieser Temperatur werden 694 µl (50 ppm) eines Acetylacetonylcyclooctenyl-platin-(II)-acetylacetonat-Katalysators in Isobutylmethylketon (1%ige Lösung) zugegeben. Anschließend werden im Verlauf von 60 Minuten 98,2 g (48,0 mmol Si-H) eines α,ω-Dihydrogenpolydimethylsiloxans der mittleren Kettenlänge 55 mit einer Viskosität von 67 mm²/s zudosiert und das Reaktionsgemisch 2 Stunden lang bei einer Temperatur von 120°C gehalten. Danach erfolgt die Abtrennung flüchtiger Bestandteile bei 110°C und einem Druck von 5 mbar. Nach Abkühlung und anschließender Filtration erhält man ein klares, hellgelbes Öl mit einer Viskosität von 26700 mm²/s und einer Jodzahl von 2,06. Die Ausbeute beträgt 98%.

### Beispiel 7

100,6 g des in Beispiel 3 beschriebenen ethoxylierten/propoxylierten Diallylamins (80,0 mmol) werden in 51,2 g Toluol unter Stickstoffinertisierung vorgelegt und auf 120°C aufgeheizt. Bei dieser Temperatur werden 698 µl (50 ppm) eines Acetylacetonylcyclooctenyl-platin-(II)-acetylacetonat-Katalysators in Isobutylmethylketon (1%ige Lösung) zugegeben. Anschließend werden im Verlauf von 60 Minuten 22,4 g (76,2 mmol Si-H) eines α,ω-Dihydrogenpolydimethylsiloxans mit einer Viskosität von 3,5 mm²/s und einer mittleren Kettenlänge von 8 zudosiert und das Reaktionsgemisch 2 Stunden lang bei einer Temperatur von 120°C gehalten. Danach erfolgt die Abtrennung flüchtiger Bestandteile bei 110°C und einem Druck von 5 mbar. Nach Abkühlung und anschließender Filtration erhält man ein klares, hellgelbes Öl mit einer Viskosität von 480 mm²/s und einer Jodzahl von 12,82. Die Ausbeute beträgt 94%.

### Beispiel 8

92,2 g des in Beispiel 1 beschriebenen ethoxylierten/propoxylierten Diallylamins (120,0 mmol) werden in 21,4 g Toluol unter Stickstoffinertisierung vorgelegt und auf 120°C aufgeheizt. Bei dieser Temperatur werden 714 µl (50 ppm) eines Acetylacetonylcyclooctenyl-platin-(II)-acetylacetonat-Katalysators in Isobutylmethylketon (1%ige Lösung) zugegeben. Anschließend werden im Verlauf von 60 Minuten 33,6 g (114 mmol Si-H) eines α,ω-Dihydrogenpolydimethylsiloxans der mittleren Kettenlänge 8 mit einer Viskosität von 3,5 mm²/s zudosiert und das Reaktionsgemisch 2 Stunden lang bei einer Temperatur von 120°C gehalten. Danach erfolgt die Abtrennung flüchtiger Bestandteile bei 110°C und einem Druck von 5 mbar. Nach Abkühlung und anschließender Filtration erhält man ein klares, hellgelbes Öl mit einer Viskosität von 204 mm²/s und einer Jodzahl von 15,03. Die Ausbeute beträgt 94%.

### Beispiel 9

88,0 g des in Beispiel 3 beschriebenen ethoxylierten/propoxylierten Diallylamins (70,0 mmol) werden in 51,0 g Toluol unter Stickstoffinertisierung vorgelegt und auf 120°C aufgeheizt. Bei dieser Temperatur werden 752 µl (50 ppm) eines Acetylacetonylcyclooctenyl-platin-(II)-acetylacetonat-Katalysators in Isobutylmethylketon (1%ige Lösung) zugegeben. Anschließend werden im Verlauf von 60 Minuten 44,4 g (66,0 mmol Si-H) eines α,ω-Trimethylsiloxy-dimethyl/methylhydrogensiloxans mit einer Viskosität von 32 mm²/s zudosiert und das Reaktionsgemisch 2 Stunden lang bei einer Temperatur von 120°C gehalten. Danach erfolgt die Abtrennung flüchtiger Bestandteile bei 110°C und einem Druck von 5 mbar. Nach Abkühlung und anschließender Filtration erhält man ein klares, hellgelbes Öl mit einer Viskosität von 14 Mio. mm²/s und einer Jodzahl von 13,3. Die Ausbeute beträgt 96%.

### Beispiel 10

20,0 g der in Beispiel 8 hergestellten Organosiliciumverbindung mit einer Viskosität von 204 mm²/s und einer Jodzahl von 15,03 sowie 1,75 g (28 mmol) eines α,ω-trimethylsilylterminierten Dimethyl/methylhydrogenpolysiloxans mit einer Viskosität von 22,5 mm²/s und 124 µl einer 1,1%igen Lösung von Acetylacetonyl-cyclooctenyl-platin-(II)-acetylacetonat-Katalysator in Isobutylmethylketon (50 ppm Platin) werden bei Raumtemperatur vorgelegt:
a) bei einer Vernetzungstemperatur von 23°C erfolgt nach 90 Minuten die Vernetzung.
b) bei einer Vernetzungstemperatur von 50°C erfolgt nach 7 Minuten die Vernetzung.

### Beispiel 11

76,8 g des in Beispiel 1 beschriebenen ethoxylierten/propoxylierten Diallylamins (100,0 mmol) werden in 34,3 g Toluol unter Stickstoffinertisierung vorgelegt und auf 120°C aufgeheizt. Bei dieser Temperatur werden 588 µl (50 ppm) eines Acetylacetonylcyclooctenyl-platin-(II)-acetylacetonat-Katalysators in Isobutylmethylketon (1%ige Lösung) zugegeben. Anschließend werden im Verlauf von 60 Minuten 26,7 g (40,0 mmol Si-H) eines α,ω-Trimethylsiloxy-dimethyl/methylhydrogensiloxans mit einer Viskosität von 32 mm²/s zudosiert und das Reaktionsgemisch 2 Stunden lang bei einer Temperatur von 120°C gehalten. Danach erfolgt die Abtrennung flüchtiger Bestandteile bei 110°C und einem Druck von 5 mbar. Nach Abkühlung und anschließender Filtration erhält man ein klares, hellgelbes Öl mit einer Viskosität von 262 mm²/s und einer Jodzahl von 36,9. Die Ausbeute beträgt 98%.

## Patentansprüche

1. Amino-alkylenoxidfunktionelle Organosiliciumverbindungen enthaltend
a) Siloxaneinheiten der Formel
RₐSi(OR¹)_{b}O_{(4-a-b)/2} (I),
wobei
R gleiche oder verschiedene, gegebenenfalls mit Halogenatomen, Alkoxy- oder Hydroxygruppen substituierte Kohlenwasserstoffreste mit 1 bis 200 Kohlenstoffatomen, die mit einem oder mehreren Sauerstoffatomen unterbrochen sein können, bedeutet,
R¹ gleiche oder verschiedene Alkylreste mit 1 bis 8 Kohlenstoffatomen, die durch ein oder mehrere Sauerstoffatome unterbrochen sein können, bedeutet,
a 0, 1, 2 oder 3 ist und
b 0, 1, 2 oder 3 ist, mit der Maßgabe, daß die Summe a+b≤ 3 ist,
und
b) je Molekül mindestens eine Einheit der Formel
AR_{c}SiO_{(4-c-1)/2} (II)
und mindestens eine Einheit der Formel
O_{(4-c-1)/2}R_{c}Si-A¹-SiR_{c}O_{(4-c-1)/2} (III),
wobei
R gleich oder verschieden sein kann und eine der oben angegebenen Bedeutungen hat,
c gleich oder verschieden sein kann und 0, 1 oder 2, bevorzugt 2, bedeutet,
A einen Rest der Formel 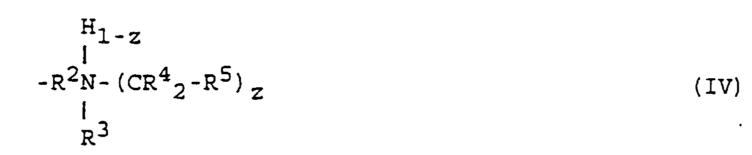 bedeutet sowie
A¹ einen Rest der Formel 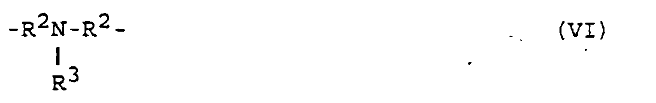 darstellt, wobei
R² gleich oder verschieden sein kann und einen zweiwertigen Kohlenwasserstoffrest mit 2 bis 12 Kohlenstoffatomen bedeutet,
R³ gleich oder verschieden sein kann und einen Rest der allgemeinen Formel
-[CH₂CH₂O]ₒ-[C₃H₆O]ₚ-[(CH₂)₄O]_{q}-R⁸ (VII)
bedeutet, wobei
R⁸ ein Wasserstoffatom, einen Alkylrest mit 1 bis 22 Kohlenstoffatomen, eine Gruppe der Formel -SiRₓ(OR¹)_{y}, wobei R und R¹ gleich oder verschieden sein können und eine der oben angegebenen Bedeutungen haben sowie x und y unabhängig voneinander gleich 0, 1, 2 oder 3 sind, mit der Maßgabe, daß x + y gleich 3 ist, oder einen Rest der Formel -CO-R⁹ mit R⁹ gleich Alkylrest mit 1 bis 8 Kohlenstoffatomen bedeutet,
z 0 oder 1 und
o, p, q unabhängig voneinander 0 oder eine ganze Zahl von 1 bis 200, bevorzugt 0 oder eine ganze Zahl von 1 bis 35, darstellen, mit der Maßgabe, daß die Summe o+p+q>0 ist,
R⁴ gleich oder verschieden ist und ein Wasserstoffatom oder einen Alkylrest mit 1 bis 8 Kohlenstoffatomen bedeutet und
R⁵ ein Wasserstoffatom oder Reste der Formel -CR⁶=CR⁶₂, -C≡CR⁶ darstellen, wobei R⁶ gleich oder verschieden sein kann und Wasserstoffatom oder einen Alkylrest mit 1 bis 8 Kohlenstoffatomen bedeutet.

2. Amino-alkylenoxidfunktionelle Organosiliciumverbindungen gemäß Anspruch 1, dadurch gekennzeichnet, daß sie eine Aminzahl von 0,003 bis 6 aufweisen.

3. Amino-alkylenoxidfunktionelle Organosiliciumverbindungen gemäß Anspruch 1 oder 2, dadurch gekennzeichnet, daß R³
-(CH₂CH₂O)₅-(CH₂-CH(CH₃)O)₅-H oder
-(CH₂CH₂O)₁₀-(CH₂-CH(CH₃)O)₁₀-H bedeutet.

4. Verfahren zur Herstellung von amino-alkylenoxidfunktionellen Organosiliciumverbindungen, dadurch gekennzeichnet, daß Organosiliciumverbindungen aus Einheiten der allgemeinen Formel
H_{d}Rₑ(OR¹)_{f}SiO_{(4-e-d-f)/2} (IX),
wobei
R und R¹ die oben dafür angegebene Bedeutung haben,
d 0 oder 1, durchschnittlich 0,001 bis 1, ist,
e und f unabhängig voneinander 0, 1, 2 oder 3 sind, mit der Maßgabe, daß die Summe d+e+f ≤ 3 ist und die Organosiliciumverbindung mehr als ein Si-gebundenes Wasserstoffatom aufweist, mit einem oder mehreren Aminen der allgemeinen Formel 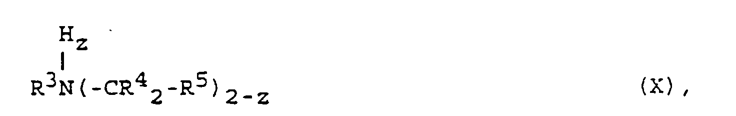 wobei z, R³, R⁴ und R⁵ die oben angegebene Bedeutung haben, mit der Maßgabe, daß die Amine gemäß Formel (X) mindestens einen Rest R⁵ verschieden Wasserstoffatom aufweisen und mindestens ein Amin der Formel (X) mit z=0 vorhanden ist, in Anwesenheit von die Anlagerung von Si-gebundenem Wasserstoff an aliphatische Kohlenstoff-Kohlenstoff-Mehrfachbindung förderndem Katalysator umgesetzt werden.

5. Verfahren nach Anspruch 4, dadurch gekennzeichnet, daß es sich bei den Organosiliciumverbindungen mit mehr als einem Si-gebundenen Wasserstoffatom je Molekül bevorzugt um solche der Formel
H_{g}R_{3-g}SiO(SiR₂O)ᵣ(SiRHO)ₛSiR_{3-g}H_{g} (XI)
handelt, wobei
R die oben dafür angegebene Bedeutung hat,
g 0 oder 1 ist,
r 0 oder eine ganze Zahl von 1 bis 1500 ist und
s 0 oder eine ganze Zahl von 1 bis 200 ist, mit der Maßgabe, daß die Organosiliciumverbindungen pro Molekül mehr als ein Si-gebundenes Wasserstoffatom aufweisen und die r Einheiten -(SiR₂O)- sowie die s Einheiten -(SiRHO)- beliebig im Molekül verteilt sein können.

6. Verfahren nach Anspruch 4 oder 5, dadurch gekennzeichnet, daß Amin der Formel (X) in solchen Mengen eingesetzt wird, daß 0,01 bis 10 Mol Amin je Grammatom Si-gebundener Wasserstoff in der Organosiliciumverbindung aus Einheiten der Formel (IX) vorliegen.

## Claims

1. Organosilicon compounds with amino-alkylene oxide functional groups, comprising
a) siloxane units of the formula
RₐSi(OR¹)_{b}O_{(4-a-b)/2} (I),
in which
R is identical or different hydrocarbon radicals having 1 to 200 carbon atoms, which are optionally substituted by halogen atoms or alkoxy or hydroxyl groups and can be interrupted by one or more oxygen atoms,
R¹ is identical or different alkyl radicals having 1 to 8 carbon atoms, which can be interrupted by one or more oxygen atoms,
a is 0, 1, 2 or 3 and
b is 0, 1, 2 or 3, with the proviso that the sum a+b≤3,
and
b) per molecule, at least one unit of the formula
AR_{c}SiO_{(4-c-1)/2} (II)
and at least one unit of the formula
O_{(4-c-1)/2}R_{c}Si-A¹-SiR_{c}O_{(4-c-1)/2} (III),
in which
R can be identical or different and has one of the abovementioned meanings,
c can be identical or different and is 0, 1 or 2, preferably 2,
A is a radical of the formula 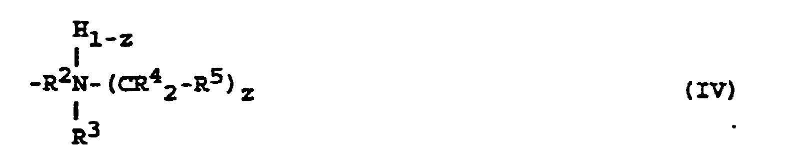 and
A¹ is a radical of the formula 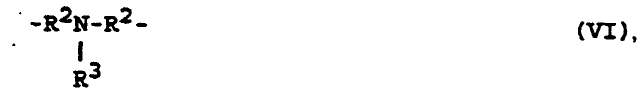
in which
R² can be identical or different and is a divalent hydrocarbon radical having 2 to 12 carbon atoms,
R³ can be identical or different and is a radical of the general formula
-[CH₂CH₂O]ₒ-[C₃H₆O]ₚ-[(CH₂)₄O]_{q}-R⁸ (VII),
in which
R⁸ is a hydrogen atom, an alkyl radical having 1 to 22 carbon atoms, a group of the formula -SiRₓ(OR¹)_{y}, in which R and R¹ can be identical or different and have one of the abovementioned meanings and x and y independently of one another are 0, 1, 2 or 3, with the proviso that x + y equals 3, or a radical of the formula -CO-R⁹, where R⁹ is an alkyl radical having 1 to 8 carbon atoms,
z is 0 or 1 and
o, p and q independently of one another are 0 or an integer from 1 to 200, preferably 0 or an integer from 1 to 35, with the proviso that the sum o+p+q>0,
R⁴ is identical or different and is a hydrogen atom or an alkyl radical having 1 to 8 carbon atoms and
R⁵ is a hydrogen atom or radicals of the formula -CR⁶=CR⁶₂ or -C≡CR⁶, in which R⁶ can be identical or different and is a hydrogen atom or an alkyl radical having 1 to 8 carbon atoms.

2. Organosilicon compounds containing amino-alkylene oxide functional groups according to Claim 1, characterized in that they have an amine number of 0.003 to 6.

3. Organosilicon compounds containing amino-alkylene oxide functional groups according to Claim 1 or 2, characterized in that R³ is
-(CH₂CH₂O)₅-(CH₂-CH(CH₃)O)₅-H or
-(CH₂CH₂O)₁₀-(CH₂-CH(CH₃)O)₁₀-H.

4. Process for the preparation of organosilicon compounds containing amino-alkylene oxide functional groups, characterized in that organosilicon compounds of units of the general formula
H_{d}Rₑ(OR¹)_{f}SiO_{(4-e-d-f)/2} (IX),
in which
R and R¹ have the meaning given above for these radicals,
d is 0 or 1, and is on average 0.001 to 1,
e and f independently of one another are 0, 1, 2 or 3, with the proviso that the sum d+e+f ≤ 3 and the organosilicon compound contains more than one Si-bonded hydrogen atom,
are reacted with one or more amines of the general formula 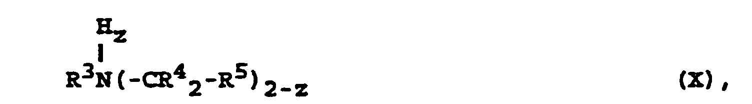 in which z, R³, R⁴ and R⁵ have the abovementioned meaning, with the proviso that the amines according to formula (X) have at least one radical R⁵ which differs from a hydrogen atom and at least one amine of the formula (X) where z=0 is present, in the presence of a catalyst which promotes the addition of Si-bonded hydrogen onto an aliphatic carbon-carbon multiple bond.

5. Process according to Claim 4, characterized in that the organosilicon compounds with more than one Si-bonded hydrogen atom per molecule are preferably those of the formula
H_{g}R_{3-g}SiO(SiR₂O)ᵣ(SiRHO)ₛSiR_{3-g}H_{g} (XI),
in which
R has the meaning given above for this radical,
g is 0 or 1,
r is 0 or an integer from 1 to 1500 and
s is 0 or an integer from 1 to 200, with the proviso that the organosilicon compounds contain more than one Si-bonded hydrogen atom per molecule and the r units - (SiR₂)O- and the s units -(SiRHO)- can be distributed as desired in the molecule.

6. Process according to Claim 4 or 5, characterized in that the amine of the formula (X) is employed in amounts such that 0.01 to 10 mol of amine are present per gram atom of Si-bonded hydrogen in the organosilicon compound of units of the formula (IX).

## Revendications

1. Composés organosiliciés à fonction oxyde d'aminoalkylène contenant
a) des unités de siloxane de formule
RₐSi(OR¹)_{b}O_{(4-a-b)/2} (I)
dans laquelle
R signifie des radicaux, hydrocarbonés avec 1 à 200 atomes de carbone, identiques ou différents, le cas échéant substitués par des atomes d'halogène, des groupements alkoxy ou des groupements hydroxyle, qui peuvent être interrompus par un ou plusieurs atomes d'oxygène,
R¹ signifie des radicaux alkyle identiques ou différents avec 1 à 8 atomes de carbone, qui peuvent être interrompus par un ou plusieurs atomes d'oxygène,
a est 0, 1, 2 ou 3, et
b est 0, 1, 2 ou 3, étant entendu que la somme a + b ≤3,
et
b) par molécule au moins une unité de formule
AR_{c}SiO_{(4-c-1)/2} (II)
et au moins une unité de formule
O_{(4-c-1)/2}R_{c}Si-A¹-SiR_{c}O_{(4-c-1)/2} (III)
dans laquelle
R peut être identique ou différent et a l'une des significations données ci-dessus,
c peut être identique ou différent et signifie 0, 1 ou 2, de préférence 2,
A signifie un radical de formule 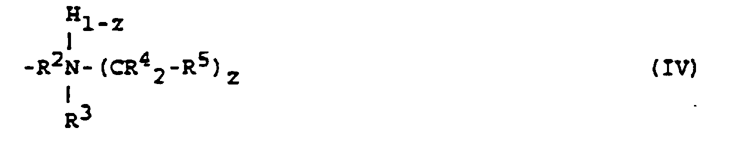 et,
A¹ représente un radical de formule 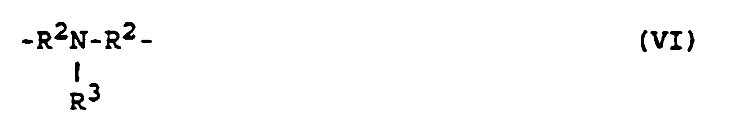
dans laquelle
R² peut être identique ou différent et signifie un radical hydrocarboné divalent avec 2 à 12 atomes de carbone,
R³ peut être identique ou différent et signifie un radical de formule générale
-[CH₂CH₂O]ₒ-[C₃H₆O]ₚ-[(CH₂)₄O]_{q}-R⁸ (VII)
dans laquelle
R⁸ signifie un atome d'hydrogène, un radical alkyle avec 1 à 22 atomes de carbone, un groupement de formule -SiRₓ(OR¹)_{y}, R et R¹ pouvant être identiques ou différents et ayant l'une des significations données ci-dessus et x et y étant, indépendamment l'un de l'autre, égaux à 0, 1, 2 ou 3, étant entendu que x + y est égal à 3, ou un radical de formule -CO-R⁹ avec R⁹ égal à un radical alkyle avec 1 à 8 atomes de carbone,
z est 0 ou 1,
o, p, q représentent, indépendamment l'un de l'autre, 0 ou un nombre entier de 1 à 200, de préférence 0 ou un nombre entier de 1 à 35, étant entendu que la somme o + p + q est > 0,
R⁴ est identique ou différent et signifie un atome d'hydrogène ou un radical alkyle avec 1 à 8 atomes de carbone et,
R⁵ représente un atome d'hydrogène ou des radicaux de formule -CR⁶=CR⁶₂, -C≡CR⁶, R⁶ pouvant être identique ou différent et signifiant un atome d'hydrogène ou un radical alkyle avec 1 à 8 atomes de carbone.

2. Composés organosiliciés à fonction oxyde d'aminoalkylène suivant la revendication 1, caractérisés en ce qu'ils présentent un indice amine de 0,003 à 6.

3. Composés organosiliciés à fonction oxyde d'aminoalkylène suivant la revendication 1 ou 2, caractérisés en ce que R³ signifie
-(CH₂CH₂O)₅-(CH₂-CH(CH₃)O)₅-H ou
-(CH₂CH₂O)₁₀-(CH₂-CH(CH₃)O)₁₀-H.

4. Procédé de préparation de composés organosiliciés à fonction oxyde d'aminoalkylène, caractérisé en ce que des composés organosiliciés à partir d'unités de formule générale
H_{d}Rₑ(OR¹)_{f}SiO_{(4-e-d-f)/2} (IX)
dans laquelle
R et R¹ ont la signification donnée ci-dessus,
d est 0 ou 1, en moyenne 0,001 à 1,
e et f sont, indépendamment l'un de l'autre, 0, 1, 2 ou 3, étant entendu que la somme d + e + f est ≤ 3 et que le composé organosilicié présente plus d'un atome d'hydrogène lié au Si, sont transformés avec une ou plusieurs amines de formule générale 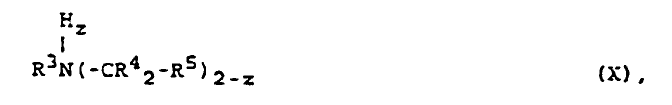 dans laquelle z, R³, R⁴ et R⁵ ont la signification donnée ci-dessus, étant entendu que les amines suivant la formule (X) présentent au moins un radical R⁵ différent d'un atome d'hydrogène et au moins une amine de formule (X) avec z=0 est disponible, en présence d'un catalyseur favorisant la fixation d'hydrogène lié au Si sur une liaison aliphatique multiple carbone-carbone.

5. Procédé suivant la revendication 4, caractérisé en ce que les composés organosiliciés avec plus d'un atome d'hydrogène lié au Si par molécule sont de préférence ceux de formule
H_{g}R_{3-g}SiO(SiR₂O)ᵣ(SiRHO)ₛSiR_{3-g}H_{g} (XI)
dans laquelle
R a la signification donnée ci-dessus,
g est 0 ou 1,
r est 0 ou un nombre entier de 1 à 1500, et s est 0 ou un nombre entier de 1 à 200, étant entendu que les composés organosiliciés présentent par molécule plus d'un atome d'hydrogène lié au Si et les r unités -(SiR₂O)- ainsi que les s unités -(SiRHO)- peuvent être réparties de manière quelconque dans la molécule.

6. Procédé suivant la revendication 4 ou 5, caractérisé en ce que l'amine de formule (X) est utilisée en quantités telles que 0,01 à 10 moles d'amine sont présentes par atome-gramme d'hydrogène lié au Si dans le composé organosilicié à partir d'unités de formule (IX).
